# EUROPÄISCHE PATENTANMELDUNG

(11) **EP 4 851 057 A2**
(43) Veröffentlichungstag der Anmeldung: **09.12.2026**
(21) Anmeldenummer: 26169162.0
(22) Anmeldetag: 30.03.2026
(51) Int. Cl.: B65B 69/00, B65B 1/28, B65B 59/04, B65G 69/18

(54) **ANSCHLUSSVORRICHTUNG**

(30) Priorität: 02.06.2025 DE 102025121427; 04.07.2025 DE 102025126301; 21.07.2025 DE 102025128708
(71) Anmelder: Hecht Technologie GmbH, 85276 Pfaffenhofen (DE)
(72) Erfinder: Heinzinger, Josef, 85276 Pfaffenhofen/Ilm (DE); Pilsner, Florian, 885276 Pfaffenhofen/Ilm (DE)
(74) Vertreter: Kilian Kilian & Partner mbB

(57) **Zusammenfassung**

Die Erfindung betrifft Aufbaukomponenten zum Aufbau einer Anschlussvorrichtung (1) zum Anschließen einer schlauchförmigen Folie an eine Einrichtung, um ein, insbesondere pulver-/granulatförmiges, Produkt durch die schlauchförmige Folie hindurch in und/oder aus der Einrichtung zu überführen, wobei die Aufbaukomponenten aufweisen:
einen Grundkörper (2), der einen Kanal (21) ausbildet, durch den, nach Aufbau der Anschlussvorrichtung (1), das Produkt bei dem Überführen bestimmungsgemäß strömt, wobei der Kanal (21) sich entlang einer Kanalachse (A) erstreckt und an einer Öffnung des Grundkörpers (20) endet und nach Außen mündet, wobei der Grundkörper (2) einen Anbindungsabschnitt (24) besitzt zur Anbindung einer eingesetzten Führungseinrichtung (6);
eine Dichteinrichtung (4), die einen Führungsabschnitt (44) aufweist, an dem die eingesetzte Führungseinrichtung (6) bei Aufbau der Anschlussvorrichtung (1) bestimmungsgemäß derart befestigt wird, dass sie die Dichteinrichtung (4) verstellen kann zwischen (i) einer Anschlussstellung, in der sie von dem Grundkörper (2) beabstandet ist und ein Überziehen der schlauchförmigen Folie über den Grundkörper (2) zulässt, und (ii) einer Dichtstellung, in der sie die über den Grundkörper (2) gezogene schlauchförmige Folie zur Überführung des Produktes gegenüber dem Grundkörper (2) abdichtet; und
mindestens eine pneumatische oder elektrische Führungseinrichtung (6a) und eine bevorzugt manuell betätigbare mechanische Führungseinrichtung (6b), aus denen bei Aufbau der Anschlussvorrichtung (1) die eingesetzte Führungseinrichtung wählbar ist; wobei
die bevorzugt manuell betätigbare mechanische Führungseinrichtung (6b) und die pneumatisch oder elektrisch betätigbare Führungseinrichtung (6a) derart dimensioniert und ausgestaltet sind, dass sie zueinander austauschbar sind, ohne dass der Anbindungsabschnitt (24) und der Führungsabschnitt (44) abgeändert werden müssen.

## Beschreibung

Die Erfindung betrifft Aufbaukomponenten für den Aufbau einer Anschlussvorrichtung zum Anschließen einer schlauchförmigen Folie an eine Einrichtung, um ein, insbesondere pulver-/granulatförmiges, Produkt durch die schlauchförmige Folie hindurch in und/oder aus der Einrichtung zu überführen.

Aus der Druckschrift EP 3718912 A1 ist eine Anschlussvorrichtung zum Anschließen einer schlauchförmigen Folie bekannt. Die dort gezeigte Anschlussvorrichtung beinhaltet pneumatisch betriebene Hubeinrichtungen zum Verstellen eines Dichtringes.

Tritt der Fall auf, dass an einem Installationsort keine pneumatischen Medien verfügbar sind, lässt sich die Anschlussvorrichtung nicht betreiben. Der Anwender muss sich nach andersartigen Anschlussvorrichtungen umsehen, was aufwendig und mühsam ist.

Vor diesem Hintergrund ist es Aufgabe der Erfindung, eine flexibel einsetzbare Anschlussvorrichtung zu schaffen. Zumindest ist es Aufgabe der Erfindung, eine zum Stand der Technik alternative Anschlussvorrichtung zu schaffen.

Diese Aufgabe(n) lösen Aufbaukomponenten zum Aufbau einer Anschlussvorrichtung gemäß Anspruch 1 und eine Anschlussvorrichtung gemäß Anspruch 7. Bevorzugte Ausführungsformen sind Gegenstand der Unteransprüche.

*Die erfindungsgemäßen Aufbaukomponenten zum Aufbau einer Anschlussvorrichtung zum Anschließen einer schlauchförmigen Folie an eine Einrichtung, um ein, insbesondere pulver-*/*granulatförmiges, Produkt durch die schlauchförmige Folie hindurch in und*/*oder aus der Einrichtung zu überführen, weisen insbesondere auf:*
*einen Grundkörper, der einen Kanal ausbildet, durch den, nach Aufbau der Anschlussvorrichtung, das Produkt bei dem Überführen bestimmungsgemäß strömt, wobei der Kanal sich entlang einer Kanalachse erstreckt und an einer Öffnung des Grundkörpers endet und nach Außen mündet, wobei der Grundkörper einen Anbindungsabschnitt besitzt zur Anbindung einer eingesetzten Führungseinrichtung;*
*eine Dichteinrichtung, die einen Führungsabschnitt aufweist, an dem die eingesetzte Führungseinrichtung bei Aufbau der Anschlussvorrichtung bestimmungsgemäß derart befestigt wird, dass sie die Dichteinrichtung verstellen kann zwischen (i) einer Anschlussstellung, in der sie von dem Grundkörper beabstandet ist und ein Überziehen der schlauchförmigen Folie über den Grundkörper zulässt, und (ii) einer Dichtstellung, in der sie die über den Grundkörper gezogene schlauchförmige Folie zur Überführung des Produktes gegenüber dem Grundkörper abdichtet; und*
*mindestens eine pneumatische oder elektrische Führungseinrichtung und eine bevorzugt manuell betätigbare mechanische Führungseinrichtung, aus denen bei Aufbau der Anschlussvorrichtung die eingesetzte Führungseinrichtung wählbar ist; wobei*
*die bevorzugt manuell betätigbare mechanische Führungseinrichtung und die pneumatisch oder elektrisch betätigbare Führungseinrichtung derart dimensioniert und ausgestaltet sind, dass sie zueinander austauschbar sind, ohne dass der Anbindungsabschnitt und der Führungsabschnitt abgeändert werden müssen.*

Die Aufbaukomponenten sind erfindungsgemäß soweit modular aufgebaut, dass die bevorzugt manuell betätigbare mechanische Führungseinrichtung und die pneumatisch oder elektrisch betätigbare Führungseinrichtung zueinander austauschbar sind.

Dadurch können die verschiedenen Führungseinrichtungen vorgehalten werden und je nach Installationsort und -umgebung die eingesetzte Führungseinrichtung hieraus ausgewählt werden.

Die letztendlich aufgebaute Anschlussvorrichtung besitzt bevorzugt eine Vielzahl von eingesetzten Führungseinrichtungen, insbesondere zwei Führungseinrichtungen, die bevorzugt um 180° um den Grundkörper herum versetzt sind. Insoweit besitzt der Grundkörper eine Vielzahl von Anbindungsabschnitten, insbesondere zwei, und die Dichteinrichtung eine entsprechende Vielzahl an Führungsabschnitten, insbesondere zwei Führungsabschnitte.

Die Dichteinrichtung ist beispielsweise ein Dichtring, der in Richtung der Kanalachse verstellt wird.

*Die eingesetzte Führungseinrichtung, d.h. die bevorzugt manuell betätigbare mechanische Führungseinrichtung oder die pneumatisch oder elektrisch betätigbare Führungseinrichtung, wird bei Aufbau der Anschlussvorrichtung bestimmungsgemäß ausschließlich an dem Grundkörper und der Dichteinrichtung befestigt.*

Der Aufbau der Anschlussvorrichtung wird dadurch weitergehend vereinfacht, weil keine Befestigungspunkte in der Umgebung der Anschlussvorrichtung für die eingesetzte Führungseinrichtung ausgebildet werden müssen. Ausschließlich der Grundkörper und die Dichteinrichtung liefern Befestigungspunkte in Form des/der Anbindungsabschnitte(s) und des/der Führungsabschnitte(s).

*Die Aufbaukomponenten sind bevorzugt aufgebaut, wobei*
*die manuell betätigbare mechanische Führungseinrichtung und die pneumatisch oder elektrisch betätigbare Führungseinrichtung derart ausgestaltet sind, dass sie nach dem wahlweisen Aufbau der Anschlussvorrichtung parallel zu der Kanalachse verlaufen.*

Die aus den Aufbaukomponenten aufgebaute Anschlussvorrichtung wird dadurch sehr kompakt.

*Bevorzugt beinhalten die Aufbaukomponenten weiterhin:*
*eine Klemmeinrichtung, die nach Aufbau der Anschlussvorrichtung bestimmungsgemäß den Grundkörper umläuft und eingerichtet ist, die über den Grundkörper gezogene schlauchförmige Folie in einem Klemmbereich abgedichtet festzuklemmen; wobei*
*die verstellbare Dichteinrichtung nach Aufbau der Anschlussvorrichtung in eine sich zwischen der Anschlussstellung und der Dichtstellung befindende Zwischenstellung verstellbar ist, in der sie die über den Grundkörper gezogene schlauchförmige Folie derart auf einen in der Klemmeinrichtung festgeklemmten Folienrest, der von einer vorangegangenen Überführung stammt, drückt, dass der Folienrest an dem Grundkörper anliegt und nach Lösen der Klemmeinrichtung bevorzugt manuell in den Kanal gezogen werden kann; und*
*die bevorzugt manuell betätigbare mechanische Führungseinrichtung derart ausgestaltet ist, dass sie in der Zwischenstellung lösbar einrastet.*

Durch die Klemmeinrichtung kann ein höherer Containmentlevel erreicht werden. Die Klemmeinrichtung ist eingerichtet, die schlauchförmige Folie bevorzugt ohne Verlaufsänderung festzuklemmen. Hierrunter ist zu verstehen, dass das Festklemmen ohne Einfalzen und/oder Einschnüren der Folie erfolgt.

Insbesondere erfolgt das Festklemmen der Folie, derart, dass die Folie in der Klemmung ihren geradlinigen Verlauf beibehält. Das bedeutet, dass bevorzugt keine in Bezug auf die Kanalachse axial wirkenden Klemmeinrichtungen, in die die Folie zur Klemmung eingeschnürt wird, oder in Bezug auf die Kanalachse radial wirkenden Klemmeinrichtungen, in die die Folie eingefalzt wird, vorgesehen sind.

Damit ist das Ziehen des Folienrestes in den Kanal für einen Anwender stark erleichtert, weil keine radialen Einschnürungen und keine axialen Einfalzungen, die mechanische Widerstände bilden, manuell gelöst werden müssen.

Das Ziehen des Folienrestes in den Kanal erfolgt beispielsweise über einen seitlichen Eingriff des Grundkörpers.

Das Andrücken der über den Grundkörper gezogenen Folie an den Folienrest erfolgt insbesondere zu einem solchen Grad, dass der Folienrest derart an dem Grundkörper anliegt, dass das Ziehen/Entfernen des Folienrestes kontaminationsfrei erfolgt.

Das Andrücken der über den Grundkörper gezogenen Folie an den Folienrest ist außerdem so stark, dass nach Entfernen des Folienrestes die über den Grundkörper gezogene Folie unmittelbar an den Grundkörper gedrückt wird.

Die schlauchförmige Folie ist beispielsweise Teil eines Behälters, in dem das pulver-/granulatförmige Produkt enthalten ist und der in die Einrichtung entleert wird.

Alternativ kann die schlauchförmige Folie Teil eines Behälters sein, in den das pulver-/granulatförmige Produkt aus der Einrichtung gefüllt wird.

In beiden Fällen kann die schlauchförmige Folie entweder integraler Bestandteil des Behälters sein oder alternativ ein schlauchförmiges Folienstück sein, das einerseits an dem Behälter und andererseits an der Einrichtung befestigt wird.

Besonders bevorzugt ist die schlauchförmige Folie integraler Bestandteil eines Bigbags und bildet den Ein- und/oder Auslauf des Bigbags.

Das Verrasten bzw. Einreisten in der Zwischenstellung erfolgt bevorzugt mittels Wechselwirkung einer Rastplatte und eines Rastbolzens.

*Bevorzugt ist die aus den Aufbaukomponenten aufgebaute Anschlussvorrichtung derart ausgebildet, dass*
*die schlauchförmige Folie ausschließlich durch die Dichteinrichtung gehalten wird, wenn sich die Dichteinrichtung in der Zwischenstellung befindet und die schlauchförmige Folie auf den Folienrest drückt, und*
*die schlauchförmige Folie in dem Klemmbereich durch die Klemmeinrichtung bestimmungsgemäß festgeklemmt wird, nachdem der Folienrest in den Kanal gezogen wurde.*

Bestimmungsgemäß wird nach dem Entfernen des Folienrestes die über den Grundkörper gezogene Folie in dem Klemmbereich durch die Klemmeinrichtung ohne Verlaufsänderung festgeklemmt, wobei dieses Festklemmen vor oder nach dem Verstellen der Dichteinrichtung in die Dichtstellung erfolgen kann.

*Bevorzugt ist die durch die Aufbaukomponenten aufgebaute Anschlussvorrichtung ausgebildet, wobei die Dichteinrichtung in der Zwischenstellung die* - *über den Grundkörper gezogene - schlauchförmige Folie radial und*/*oder axial zur Kanalachse auf den Folienrest drückt.* Beispielsweise kann die im Folgenden noch erläuterte Dichtlippe die schlauchförmige Folie radial und/oder axial zur Kanalachse auf den Folienrest drücken.

*Bevorzugt beinhaltet die Dichteinrichtung (i) einen Dichtring, der nach Aufbau der Anschlussvorrichtung in der Dichtstellung der Dichteinrichtung die schlauchförmige Folie radial und*/*oder axial zur Kanalachse gegenüber dem Grundkörper abdichtet, und (ii) einen in einem Abstand zu dem Dichtring gehaltenen Streifring, der nach Aufbau der Anschlussvorrichtung die schlauchförmige Folie bei Verstellen der Dichteinrichtung in die Zwischenstellung über den Folienrest streift und auf den Folienrest drückt.*

Die Dichteinrichtung ist insbesondere so ausgestaltet, dass der Anwender die schlauchförmige Folie durch den Dichtring und den Streifring hindurchführt, bevor er die schlauchförmige Folie über den Grundkörper und den hieran befestigten Folienrest zieht.

*Der Streifring streift bei Verstellen der Dichteinrichtung in die Zwischenstellung die schlauchförmige Folie axial zur Kanalachse über den Folienrest und drückt radial zur Kanalachse auf den Folienrest, wonach*
*der Dichtring die schlauchförmige Folie durch Verstellen der Dichteinrichtung von der Zwischenstellung in die Dichtstellung axial zur Kanalachse gegenüber einer Stirnseite der Öffnung abdichtet.*

Der Dichtring weist hierfür bevorzugt eine Dichtung auf, die nach Aufbau der Anschlussvorrichtung der genannten Stirnseite der Öffnung in den Grundkörper zugewandt ist.

*Bevorzugt ist die Anschlussvorrichtung derart aufgebaut, dass der Streifring axial zur Kanalachse relativ zu dem Dichtring versetzbar ist und bei Verstellen der Dichteinrichtung von der Zwischenstellung in die Dichtstellung ortsfest bleibt.*

*Bevorzugt ist der Grundkörper zumindest derart aufgebaut, dass er von dem Klemmbereich bis zu der Öffnung eine ausschließlich parallel zu der Kanalachse verlaufende Außenoberfläche besitzt, auf die die Dichteinrichtung den Folienrest in der Zwischenstellung mittelbar über die schlauchförmige Folie drückt und auf die die Klemmeinrichtung die schlauchförmige Folie in dem Klemmbereich ohne Verlaufsänderung andrückt.*

Insbesondere sind in diesem Zusammenhang auf der Außenoberfläche und der Stirnseite der Öffnung keine Ausnehmungen, wie Schlitze oder Vertiefungen gebildet, in denen die schlauchförmige Folie festgeklemmt wird.

*Bevorzugt ist die Klemmeinrichtung ein Spannband oder eine Sackklemme, das*/*die die schlauchförmige Folie flach an den Grundkörper drückt.*

Das Spannband kann ein elastisches Band sein, dass mittels einer Schnalle geöffnet und geschlossen werden kann.

Die alternative Sackklemme ist bevorzugt aus einer Vielzahl von Schwenkarmen aufgebaut. Beispielsweise besitzt die Sackklemme zwei oder drei Schwenkarme, die an eine Außenkontur des Grundkörpers angepasst sind und die mittels Gelenken miteinander verbunden sind. Die Sackklemme ist bevorzugt so gelagert, dass sie in einer Ebene senkrecht zu der Kanalachse geöffnet und geschlossen werden kann.

*Bevorzugt sind die Aufbaukomponenten aufgebaut, wobei*
*die bevorzugt manuell betätigbare mechanische Führungseinrichtung einen an dem Anbindungsabschnitt zu befestigenden Gehäuserahmen aufweist, der nach Aufbau der Anschlussvorrichtung in Richtung der Kanalachse verläuft und einen betätigbaren Spanner haltert, der sich bei Betätigung der mechanischen Führungseinrichtung in Richtung der Kanalachse relativ zu dem Gehäuserahmen bewegt und die Dichteinrichtung verstellt.*

Der Gehäuserahmen ist beispielsweise ein teilweise offenes Gehäuse, das aus einer beispielsweise tiefgezogenen Metallplatte gebildet ist. Der Gehäuserahmen wird auf identische Art und Weise an dem jeweiligen Anbindungsabschnitt bestimmungsgemäß befestigt wie die pneumatische oder elektrische Führungseinrichtung. Zur Befestigung an dem jeweiligen Anbindungsabschnitt dient beispielsweise eine Schraubverbindung.

Der Spanner beinhaltet bevorzugt zwei Spannerarme, wobei einer der Spannerarm an dem Gehäuserahmen drehbar befestigt ist. Ein weiterer der Spannerarme ist einerseits drehbar an dem einen Spannerarm befestigt und andererseits an der Dichteinrichtung. Beide Spannerarme haben eine Längserstreckung, die in Richtung der Kanalachse A verläuft, wodurch der Spanner kompakt in dem Gehäuserahmen aufgenommen ist.

Diese Ausgestaltung der bevorzugt manuell betätigbaren Führungseinrichtung, d.h. das Vorsehen des Gehäuserahmens und die entsprechende Halterung des Spanners, ist dafür verantwortlich, dass sie mit der pneumatischen Führungseinrichtung austauschbar ist.

*Bevorzugt sind die Aufbaukomponenten aufgebaut, wobei*
*die betätigbare mechanische Führungseinrichtung eine an dem Gehäuserahmen befestigte Rastplatte, die sich in Richtung der Kanalachse erstreckt, und einen an dem Spanner befestigten Schwenkhebel aufweist, der durch ein Schwenken den Spanner bewegt und mit einem quer zur Kanalachse verlaufenden Rastbolzen in der Zwischenstellung in die Rastplatte lösbar einrastet.*

*Bevorzugt sind die Aufbaukomponenten aufgebaut, wobei*
*der Schwenkhebel einen quer zur Kanalachse verlaufenden Greifabschnitt aufweist, an dem ein Anwender den Schwenkhebel zur Verstellung der Dichteinrichtung greift und der während des gesamten Verstellens der Dichteinrichtung quer zur Kanalachse verläuft, wobei an dem Greifabschnitt eine Rastbetätigung ausgebildet ist, die ein Anwender in der Zwischenstellung zum Lösen des Rastbolzens betätigen kann.*

Die Rastplatte erstreckt sich bevorzugt in Richtung der Kanalachse A parallel zu dem Spanner und/oder bevorzugt parallel zu dem Grundkörper.

Der Greifabschnitt 68b ist bevorzugt um seine Längsachse drehbar gelagert, sodass der Anwander den Schwenkhebel zur Verstellung der Dichteinrichtung greifen kann, ohne dass sich der Greifabschnitt in der Hand des Anwenders bei Verstellen des Schwenkhebels dreht. Der Greifabschnitt behält seine Orientierung quer zur Kanalachse während des gesamten Verstellens der Dichteinrichtung.

Der Rastbolzen des Schwenkhebels dient zur Interaktion mit der genannten Rastplatte.

Der Rastbolzen verläuft bevorzugt quer zur Kanalachse und ist in Richtung der Rastplatte bevorzugt vorgespannt. Wenn sich die Dichteinrichtung in der Zwischenstellung befindet, ist der Rastbolzen in einen Durchbruch oder eine Vertiefung in der Rastplatte eingerastet und lässt sich durch Betätigen der Rastbetätigung lösen.

Die manuell betätigbare Führungseinrichtung beinhaltet bevorzugt eine Federeinrichtung, die nach Aufbau der Anschlussvorrichtung das Verstellen der Dichteinrichtung in einer Richtung unterstützt und in einer entgegengesetzten Richtung durch den Anwender komprimiert wird.

Die Federeinrichtung ist beispielsweise eine Gasdruckfeder.

Wenn die Anschlussvorrichtung zur Entleerung eines Behälters dient, unterstützt die Federeinrichtung beispielsweise das Verstellen der Dichteinrichtung von der Dichtstellung in die Zwischenstellung und Anschlussstellung. Der Rastbolzen ist in diesem Fall bevorzugt auch in der Dichtstellung eingerastet und hält die Federeinrichtung. Alternativ kann/können der Spanner bzw. die entsprechenden Spannerarme so ausgestaltet sein, dass der Spanner die Federeinrichtung in der Dichtstellung hält und damit auch die Dichteinrichtung. In der Anschlussstellung hält die Gasdruckfeder bevorzugt die Dichteinrichtung.

Wenn die Anschlussvorrichtung zur Befüllung des Behälters dient, unterstützt die Federeinrichtung beispielsweise das Verstellen der Dichteinrichtung von der Anschlussstellung in die Zwischenstellung und Dichtstellung. Der Rastbolzen ist in diesem Fall bevorzugt auch in der Anschlussstellung eingerastet und hält die Federeinrichtung, oder alternativ besitzt die Dichteinrichtung ein solches Gewicht, dass sie sich selbst in der Anschlussstellung hält. In der Dichtstellung hält die Gasdruckfeder bevorzugt die Dichteinrichtung. Alternativ kann/können der Spanner bzw. die entsprechenden Spannerarme so ausgestaltet sein, dass der Spanner die Federeinrichtung in der Dichtstellung hält und damit auch die Dichteinrichtung.

Der Anwender kann in beiden Fällen den Rastbolzen durch Betätigung der Rastbetätigung lösen.

Die Ausgestaltung der bevorzugt manuell betätigbaren mechanischen Führungseinrichtung ist der Grund dafür, dass sie eine pneumatische Führungseinrichtung ersetzen kann, insbesondere deshalb, weil der Gehäuserahmen ähnliche Abmessungen besitzt, wie ein pneumatischer Hubzylinder und alle mechanischen Elemente an oder in diesem Gehäuserahmen befestigt sind.

Die Erfindung betrifft ebenfalls eine Anschlussvorrichtung zum Anschließen einer schlauchförmigen Folie an eine Einrichtung, die dadurch erhältlich ist, dass für die eingesetzte Führungseinrichtung die bevorzugt manuell betätigbare Führungseinrichtung gewählt ist. Die obigen Erläuterungen zu den entsprechenden Komponenten und insbesondere zu der bevorzugt manuell betätigbaren Führungseinrichtung gelten für die erfindungsgemäße Anschlussvorrichtung gleichermaßen.

Im Folgenden wird eine bevorzugte Ausführungsform der Erfindung unter Bezug auf die beigefügten Figuren beschrieben.
**Figur 1** zeigt eine durch die erfindungsgemäßen Aufbaukomponenten erhältliche Anschlussvorrichtung in einer perspektivischen Ansicht, wobei sich eine Dichteinrichtung in einer Dichtstellung befindet, in der sie eine nicht gezeigte schlauchförmige Folie abdichtet.
**Figuren 2a bis 2e** zeigen die Anschlussvorrichtung aus Figur 1 in Schnittansichten, wobei Figur 2a die Anschlussvorrichtung in einer Anschlussstellung zeigt, Figuren 2b und 2c die Anschlussvorrichtung in einer Zwischenstellung zeigen, und Figuren 2d und 2e die Anschlussvorrichtung in einer Dichtstellung zeigen.
**Figuren 3a** **und** **3b** zeigen eine aufgebaute Anschlussvorrichtung, wobei die in den vorstehenden Figuren 1 und 2a bis 2e eingesetzten pneumatischen Führungseinrichtungen durch die modular austauschbaren mechanischen Führungseinrichtungen ausgetauscht sind bzw. die Anschlussvorrichtung unter Einsatz der mechanischen Führungseinrichtungen aufgebaut ist;
**Figuren 4a** **und** **4b** zeigen eine Anschlussvorrichtung zum Anschließen einer schlauchförmigen Folie und zum Befüllen von Behältern.

Die Erfindung ist im Kern auf Aufbaukomponenten gerichtet, die dazu dienen, eine Anschlussvorrichtung zum Anschließen einer schlauchförmigen Folie aufzubauen.

Wesentliche Elemente der Aufbaukomponenten sind ein Grundkörper 2, eine Dichteinrichtung 4 und bei Aufbau/Installation der Anschlussvorrichtung zur Verfügung stehende Führungseinrichtungen, aus denen die letztendlich installierte bzw. eingesetzte Führungseinrichtung gewählt werden kann.

Die Aufbaukomponenten können auch als einzelne Module betrachtet werden, aus denen die eingesetzten Komponenten gewählt werden können.

Erfindungsgemäß stehen bei Aufbau der Anschlussvorrichtung zur Auswahl eine pneumatische oder elektrische Führungseinrichtung und eine bevorzugt manuell betätigbare mechanische Führungseinrichtung. Die mechanische Führungseinrichtung kommt gänzlich ohne zugeführte Elektrizität oder Medien, wie Druckluft aus.

Im Folgenden werden die Aufbaukomponenten anhand bereits aufgebauter Anschlussvorrichtungen erläutert.

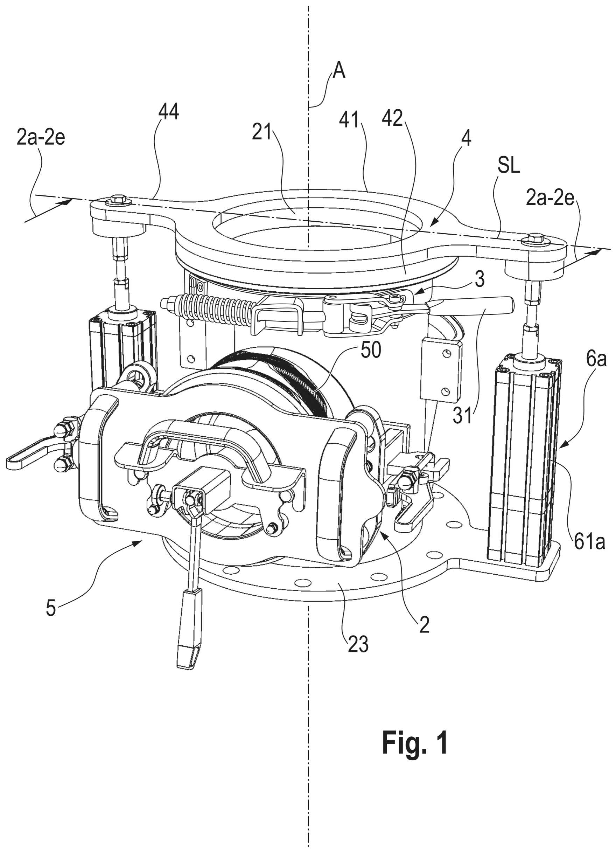

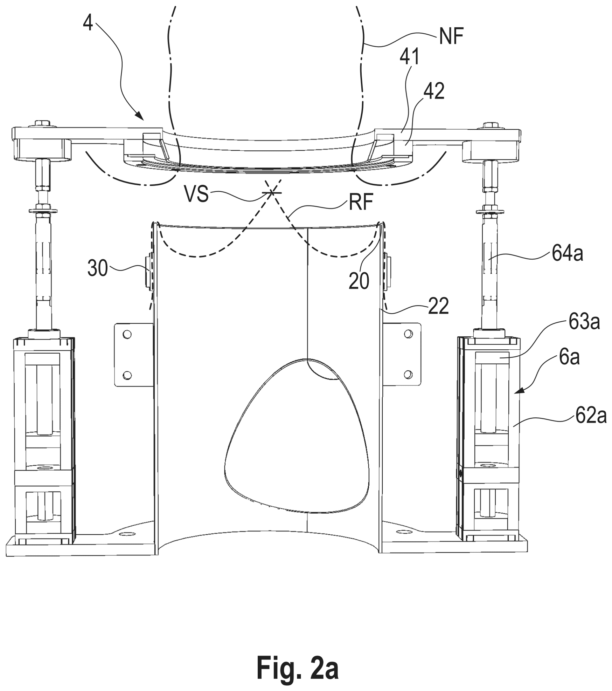

In Figur 1 ist eine Anschlussvorrichtung 1 in einer perspektivischen Ansicht dargestellt. Die weiteren Figuren 2a bis 2e zeigen die Anschlussvorrichtung 1 in Schnittansichten, wobei die entsprechende Schnittebene durch eine in Figur 1 gezeigte Schnittlinie SL und eine Kanalachse A aufgespannt wird. Die den Figuren 2a bis 2e entsprechende Blickrichtung ist in Figur 1 ebenfalls eingezeichnet und mit 2a-2e bezeichnet.

Die Anschlussvorrichtung 1 beinhaltet den Grundkörper 2 (Grundkörperkomponente) mit einem bevorzugten seitlichen Eingriff 5, eine bevorzugte Klemmeinrichtung 3 (Klemmeinrichtungskomponente), die Dichteinrichtung 4 (Dichteinrichtungskomponente), und eine austauschbare Führungseinrichtung 6a (Führungseinrichtungskomponente). In der in Figur 1 gezeigten Variante beinhaltet die Anschlussvorrichtung zwei Führungseinrichtungen 6a, die pneumatische Führungseinrichtungen 6a sind.

Die Dichteinrichtung 4 ist bevorzugt über die Führungseinrichtungen 6a verstellbar und in Figur 1 maximal an den Grundkörper 2 herangefahren. Diese Stellung der Dichteinrichtung 4 entspricht einer Dichtstellung, die im Folgenden noch detaillierter beschrieben werden wird.

Die Anschlussvorrichtung 1 dient erfindungsgemäß zum Anschließen einer schlauchförmigen Folie an eine Einrichtung, um beispielsweise einen Behälter mit der Einrichtung zu verbinden.

In der Schüttgüter herstellenden Industrie werden beispielsweise pulver-/granulatförmige Produkte aus Einrichtungen, wie Produktionsanlagen oder Silos, in Behälter, wie beispielsweise sogenannte BigBags oder Fässer gefüllt.

Die gefüllten Behälter werden anschließend auf Seiten der Schüttgüter verarbeitenden Industrie in Einrichtungen, wie beispielsweise Verarbeitungsanlagen oder Silos, entleert, um das Produkt einer weiteren Verarbeitung zu unterziehen oder für eine spätere Verarbeitung zu speichern.

In beiden Vorgängen, d.h. bei der Befüllung und/oder Entleerung, werden die Behälter mit der entsprechenden Einrichtung vorzugsweise über eine schlauchförmige Folie verbunden. Die schlauchförmige Folie kann Teil des Behälters selbst oder eine einfache schlauchförmige Verbindungsfolie sein, die sich zwischen dem Behälter und der Einrichtung erstreckt.

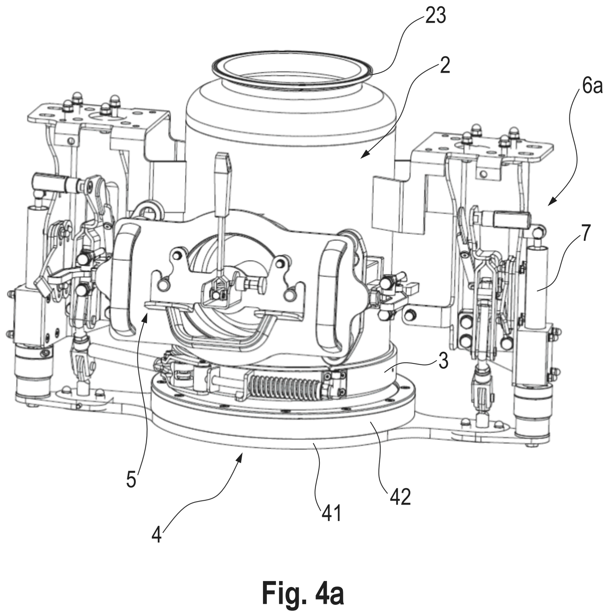

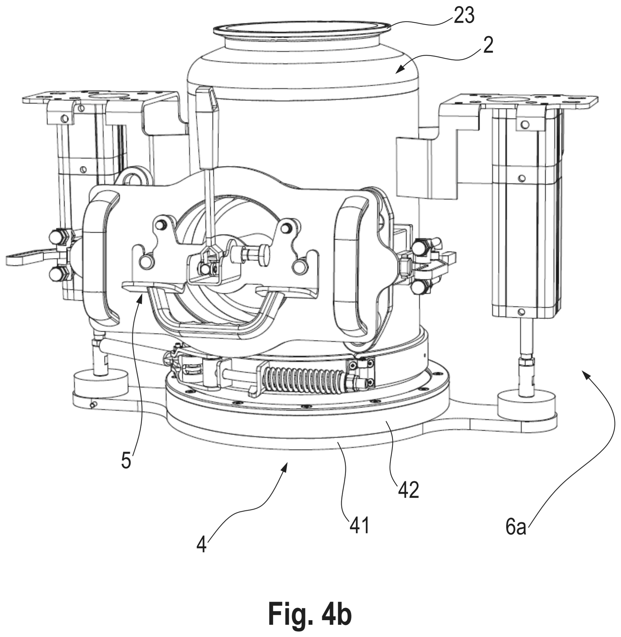

Beispielsweise kann es sich bei der schlauchförmigen Folie um den Einlass/Auslass eines BigBags oder um den Einlass/Auslass eines Innensackes eines Fasses handeln. Die Anschlussvorrichtung 1 erlaubt ein zuverlässiges und sicheres Anschließen einer solchen schlauchförmigen Folie und ist insbesondere eine Anschlussvorrichtung zum Entleeren von Behältern. Weiter unten wird unter Bezug auf die Figur 4 Aufbaukomponenten für den Aufbau einer Anschlussvorrichtung zum Befüllen von Behältern beschrieben.

Je nach Industriezweig oder Umgebung, in der die Anschlussvorrichtung 1 installiert wird, stehen unterschiedliche Versorgungs-/Medienanschlüsse zum Betreiben von Anlagen, wie der Anschlussvorrichtung 1 zur Verfügung. Beispielsweise können in räumlicher Nähe pneumatische Anschlüsse, elektrische Anschlüsse oder auch überhaupt keine Anschlüsse vorhanden sein.

Um diesen Umständen zu begegnen, sind die erfindungsgemäßen Anschlusskomponenten bevorzugt modular aufgebaut. Insbesondere die im Folgenden noch näher erläuterten Führungseinrichtungen 6a können pneumatisch oder mechanisch aufgebaut sein. Eine elektrische Variante der Führungseinrichtungen 6a kann bevorzugt zusätzlich vorgesehen sein.

### (Grundkörper 2, Grundkörperkomponente)

Der konstruktive Aufbau des Grundkörpers wird unter Bezug auf Figur 1 erläutert.

Der Grundkörper 2 bildet in seinem Innenraum einen Kanal 21 aus, der sich entlang der bereits genannten Kanalachse A erstreckt. Der Grundkörper 2 ist beispielsweise aus einem Metall gefertigt. Die Kanalachse A entspricht der Längsachse des Grundkörpers 2. Der Durchmesser des Kanals 21 beträgt beispielsweise 0,3m, 0,4m, 0,5m.

Bei bestimmungsgemäßer Verwendung der erfindungsgemäßen Anschlussvorrichtung 1 kann das Produkt in Richtung der Kanalachse A durch den Grundkörper 2 bzw. den Kanal 21 hindurch überführt werden.

Der Kanal 21 mündet an einem Anschlussende der Anschlussvorrichtung 1, an dem die schlauchförmige Folie bestimmungsgemäß anzuschließen ist, über eine Öffnung 20 des Grundkörpers 2 in die Außenumgebung der Anschlussvorrichtung 1.

An einem entgegengesetzten Ende des Grundkörpers 2 befindet sich ein Montageflansch 23, über den die Anschlussvorrichtung 1 an der entsprechenden Einrichtung, beispielsweise mittels Schraubverbindungen, befestigt werden kann. Der Grundkörper 2 kann für die Befestigung an der Einrichtung auch anders aufgebaut sein; beispielsweise kann der Grundkörper 2 per Schellenverbindung, wie Tri-clamp-Schellen, oder per Rohrkupplungen oder Muffenverbindungen, wie BMF-Verbindungen (BMF Markenname), an der Einrichtung befestigt werden.

Der Kanal 21 mündet an dem entgegengesetzten Ende nach Montage der Anschlussvorrichtung 1 in die genannte Einrichtung.

Erfindungsgemäß beinhaltet der Grundkörper 2 mindestens einen Anbindungsabschnitt 24, an dem die jeweilige eingesetzte Führungseinrichtung 6a befestigt ist bzw. mit dem Grundkörper 2 verbunden ist. Der Anbindungsabschnitt 24 ist in dieser Ausführungsform eine sich radial zur Kanalachse A erstreckende monolithische Erweiterung des Montageflansches 23, wobei diese Ausgestaltung lediglich bevorzugt ist. Der Anbindungsabschnitt 24 kann auch an anderer Stelle ausgebildet sein. Wie gezeigt beinhaltet der Grundkörper 2 zwei Anbindungsabschnitte 24, an denen jeweils eine pneumatische Führungseinrichtung 6a befestigt ist.

Die Anschlussvorrichtung 1 beinhaltet zudem bevorzugt einen seitlichen Eingriff 5, der an dem Grundkörper 2 ausgebildet ist. Die folgend beschriebene Ausgestaltung des seitlichen Eingriffes ist lediglich optional.

Wenn ein geforderter Containmentlevel nicht hoch ist, kann der Eingriff 5 auch insgesamt entfallen. Gleiches gilt für die später beschriebene Klemmreinrichtung 3.

Der seitliche Eingriff 5 dient dazu, einen Folienrest RF, der von einer zuvor angeschlossenen schlauchförmigen Folie stammt, zu entfernen.

Damit das Entfernen des Folienrests RF kontaminationsfrei durchgeführt werden kann, ermöglicht der seitliche Eingriff 5 das Befestigen eines Foliensackes oder bevorzugt einer Endlosschlauchfolie 50. Alternativ kann an dem seitlichen Eingriff 5 ein elastischer Handschuh befestigt sein.

Ein Anwender kann die Endlosschlauchfolie 50 streckenweise von dem seitlichen Eingriff 5 abziehen und wie einen Handschuh benutzen, indem er hierdurch in den Grundkörper 2 durch den seitlichen Eingriff 5 hindurch eingreift, um den genannten Folienrest RF nach Lösen der weiter unten erläuterten Klemmeinrichtung 3 in den Kanal 21 und, von dort, aus dem Grundkörper 2 in die abgezogene Endlosfolie zu ziehen.

Der in der Endlosfolie 50 befindliche Folienrest RF wird darin durch einen ersten Verschluss eingeschlossen. Anschließend kann ein zweiter Verschluss gesetzt werden. Zur Entsorgung des Folienrests RF wird die Endlosschlauchfolie 50 zwischen dem ersten und zweiten Verschluss durchtrennt.

Der seitliche Eingriff 5 kann bevorzugt durch einen Deckel 51 verschlossen werden, der dafür sorgt, dass sich kein Produkt in dem seitlichen Eingriff 5 ansammelt.

### (Klemmeinrichtung 3, Klemmkomponente)

Wie bereits im Vorhergehenden erwähnt wurde, ist die Klemmeinrichtung 3 entbehrlich, wenn kein hoher Containmentlevel gefordert ist. Außerdem ist der folgend beschriebene Aufbau der Klemmeinrichtung 3 optional und lediglich bevorzugt.

Die Klemmeinrichtung 3 dient insbesondere zur Befestigung und Abdichtung einer anzuschließenden schlauchförmigen Folie. Die Klemmeinrichtung 3 ist bevorzugt ein Spannband oder eine in Figur 1 gezeigte Sackklemme, die an einem entsprechenden Verschluss geöffnet und geschlossen werden kann.

Die Klemmeinrichtung 3, insbesondere das Spannband oder die Sackklemme, ist so ausgestaltet, dass sie den Grundkörper 2 vollständig umläuft und die schlauchförmige Folie mit einer flachen Klemmfläche 30 in einem Klemmbereich ohne Verlaufsänderung flach an eine Außenoberfläche 22 des Grundkörpers 2 drückt.

Die Außenoberfläche 22 des Grundkörpers 2 verläuft von dem Klemmbereich bis zu der Öffnung 20 bevorzugt ausschließlich geradlinig, insbesondere parallel, zu der Kanalachse A und ist damit vollständig glatt ausgebildet.

### (Dichteinrichtung 4, Dichtungskomponente)

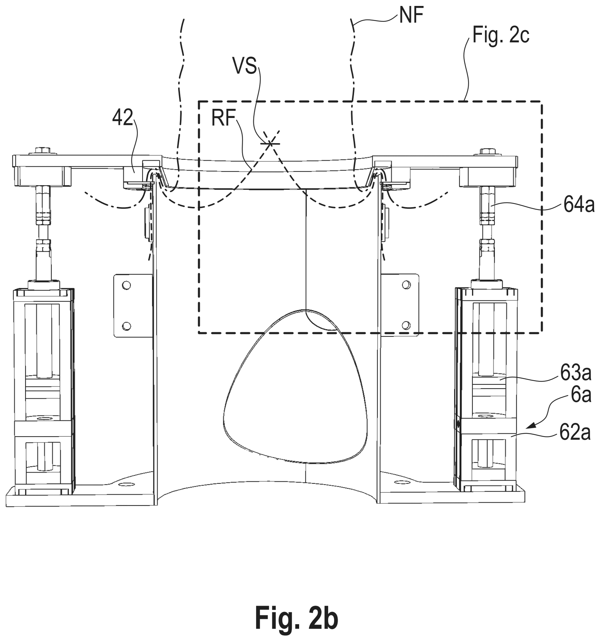

Die erfindungsgemäße Anschlussvorrichtung 1 beinhaltet ferner bevorzugt die Dichteinrichtung 4, die im Folgenden unter Bezug auf Figuren 2a und 2b beschrieben wird.

Die Dichteinrichtung 4 weist einen Dichtring 41 und einen Streifring 42 auf.

Der Dichtring 41 trägt auf der der Öffnung 20 des Grundkörpers 2 zugewandten Seite eine Dichtung 45, die die schlauchförmige Folie gegenüber einer Stirnseite der Öffnung 20 abdichtet, wenn die Dichteinrichtung 4 sich in einer im Folgenden noch erläuterten Dichtstellung befindet.

Der Streifring 42 ist mit dem Dichtring 41 verbunden.

Der Streifring 42 trägt auf der der Kanalachse A zugewandten Seite eine Dichtlippe 46. Die Dichtlippe 46 dient dazu, eine neue anzuschließende, schlauchförmige Folie über einen Folienrest RF, der durch die Klemmeinrichtung 3 festgeklemmt ist, zu streifen. Die entsprechende Funktion wird im Folgenden noch im Detail erläutert.

Die Dichteinrichtung 4 ist über Führungsabschnitte 44, die in Umfangsrichtung des Dichtrings 41 in einem bestimmten Abstand zueinander ausgebildet sind, an einer jeweilen der pneumatischen Führungseinrichtungen 6a befestigt. Bevorzugt sind die pneumatischen Führungseinrichtungen 6a Hubzylinder und sind in Richtung der Kanalachse A beispielsweise pneumatisch linear verstellbar, wodurch die Dichteinrichtung 4 axial zur Kanalachse A linear verfahren bzw. verstellt werden kann.

Im Folgenden wird unter Bezug auf die Figuren 2a bis 2e das - nach Installation bzw. Zusammensetzen der Aufbaukomponenten - mit der resultierenden Anschlussvorrichtung 1 bestimmungsgemäße Anschließen einer schlauchförmigen Folie beschrieben.

Der beschriebene Ablauf entspricht einer Entleerung eines BigBags, wobei der Aufbau hierauf nicht beschränkt ist.

Die Dichteinrichtung 4 kann insbesondere in mindestens drei Stellungen verstellt werden.

### (Anschlussstellung bzw. Ausgangsstellung)

In Figur 2a befindet sich die Dichteinrichtung 4 in einer Ausgangsstellung bzw. Anschlussstellung, in der sie durch die Führungseinrichtungen 6a von dem Grundkörper 2 bevorzugt maximal weggefahren ist.

Die Dichteinrichtung 4 befindet sich in dieser Stellung in einem solchen Abstand von dem Grundkörper 2, dass eine neue schlauchförmige Folie NF, die beispielsweise Teil des BigBags ist, durch den Dichtring 41 und den Streifring 42 hindurch über den Grundkörper 2 gezogen werden kann. In Figur 2a ist die neue schlauchförmige Folie NF nach Durchlaufen des Dichtrings 41 und des Streifrings 42 nach oben geschlagen.

Ein Folienrest RF verschließt die Öffnung 20 des Grundkörpers 2.

Der Folienrest RF stammt von einem zuvor angeschlossenen BigBag, der nach Überführung (bspw. Entleerung) des Produktes dadurch entfernt wurde, dass seine schlauchförmige Folie zweifach abgebunden und zwischen den entsprechenden Verschlussstellen durchtrennt wurde. Die an dem Folienrest RF verbleibende Verschlussstelle VS ist in Figur 2a gezeigt.

Folienrest RF ist auf der Außenoberfläche 22 in dem Klemmbereich durch die Klemmeinrichtung 3 abgedichtet festgeklemmt, indem die Klemmeinrichtung 3 den Folienrest mit ihrer flachen Klemmfläche 30 auf die Außenoberfläche 22 drückt.

### (Zwischenstellung)

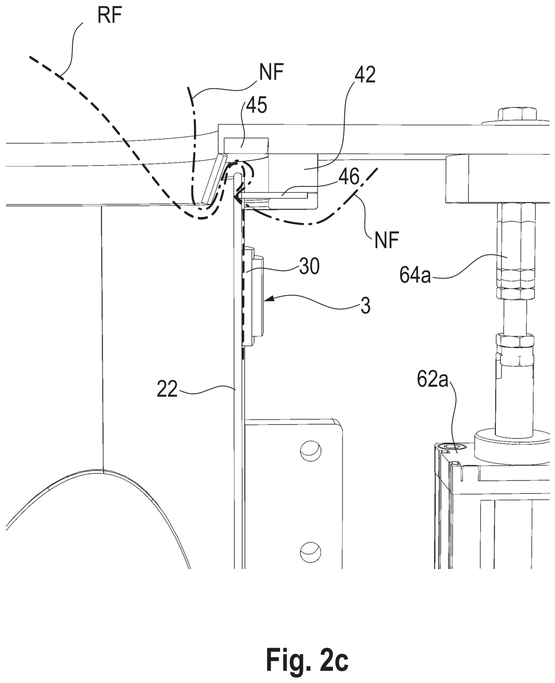

Die pneumatischen Führungseinrichtungen 6a verstellen die Dichteinrichtung 4 von der in Figur 2a gezeigten Anschlussstellung in die in Figuren 2b und 2c gezeigte Zwischenstellung.

Dieses Verstellen erfolgt durch die Führungseinrichtungen 6a so weit, dass die Dichtlippe 46 den Grundkörper 2 erreicht und die neue schlauchförmige Folie NF axial zur Kanalachse A über den Folienrest RF streift.

Zugleich drückt die Dichtlippe 46 die neue schlauchförmige Folie NF auf den Folienrest RF, wobei der Druck insoweit ausreichend ist, dass die Dichtlippe 46 den Folienrest RF mittelbar über die neue schlauchförmige Folie NF gegen die Außenfläche 22 des Grundkörpers 2 drückt.

Der Anwender kann in der erreichten Zwischenstellung die Klemmeinrichtung 3 öffnen.

Der Anwender kann in dieser Zwischenstellung nunmehr den Folienrest durch den Eingriff 5 hindurch ergreifen und, wie bereits erläutert, von der Öffnung 20 entfernen. Hierbei zieht er den Folienrest RF unter der neuen schlauchförmigen Folie NF weg, wobei die Dichtlippe 46 das Andrücken aufrechterhält. Dieser Vorgang ist für den Anwender leichtgängig und erfordert nicht viel Kraft, da die Restfolie auf der Außenoberfläche 22 geradlinig verläuft und durch das Spannband 3 nur flach angedrückt wurde.

Der Anwender kann anschließend die Klemmeinrichtung 3 wieder schließen und dadurch die neue schlauchförmige Folie NF in dem Klemmbereich an die Außenoberfläche 22 des Grundkörpers 2 abgedichtet drücken, wobei die Klemmfläche 30 des Spannbandes 3 die neue schlauchförmige Folie NF auf der Außenoberfläche 22 abgedichtet festklemmt.

### (Dichtstellung)

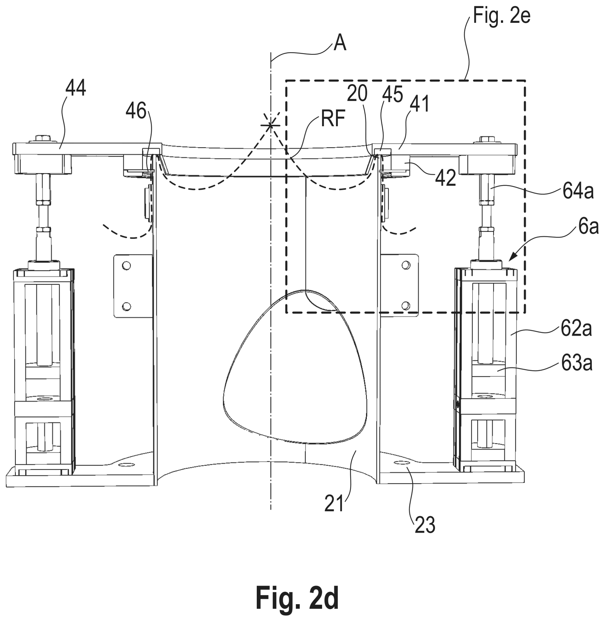

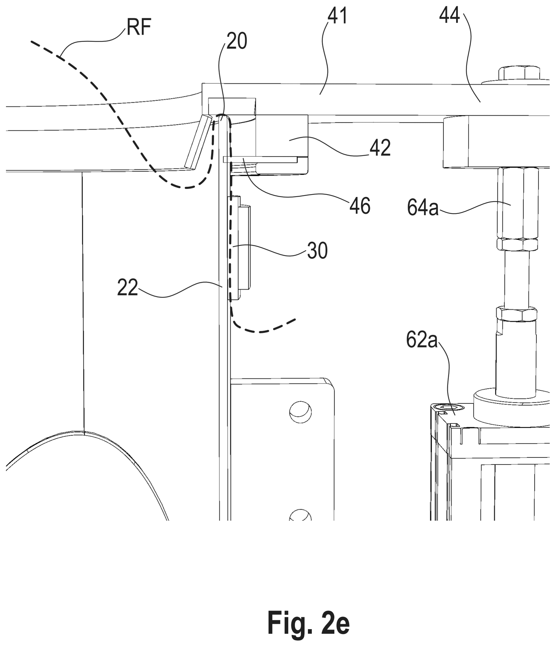

Hiernach verstellen die Führungseinrichtungen die Dichteinrichtung 4 in die in Figuren 2d und 2e gezeigte Dichtstellung, wobei die Dichtung 45 des Dichtringes 41 die neue schlauchförmige Folie gegen die Stirnseite der Öffnung 20 des Grundkörpers 2 abgedichtet drückt.

Das Schließen der Klemmeinrichtung 3 und das damit erfolgende Festklemmen der neuen schlauchförmigen Folie NF kann auch erst in dem jetzt erreichten Zustand erfolgen.

Anschließend kann der BigBag geöffnet werden, um das darin aufgenommene Produkt in die Einrichtung zu überführen. Nach Entleerung des BigBags wird die schlauchförmige Folie zweifach abgebunden und durchtrennt.

Daraufhin kehrt der Ablauf zu Figur 2a zurück für den Anschluss eines neuen Behälters.

Hervorzuheben ist, dass die bevorzugte Klemmung durch die Klemmeinrichtung 3, das bevorzugt abgedichtete Andrücken durch die Dichtlippe 46 und das Abdichten durch die Dichtung 45 ohne Verlaufsänderung der Folie flach erfolgt. Es sind insbesondere keine Klemmeinrichtungen vorgesehen, in denen die Folie (NF/RF) gefaltet oder eingefalzt festgeklemmt sind.

Damit ist das Herausziehen des Folienrestes RF durch den Eingriff 5 hindurch für den Anwender sehr erleichtert, weil keine radialen Einschnürungen oder axiale Einfalzungen, die Widerstände bilden, manuell gelöst werden müssen.

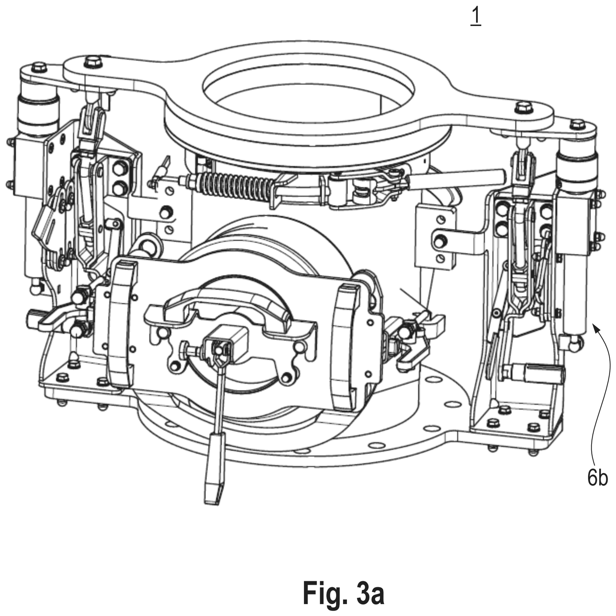

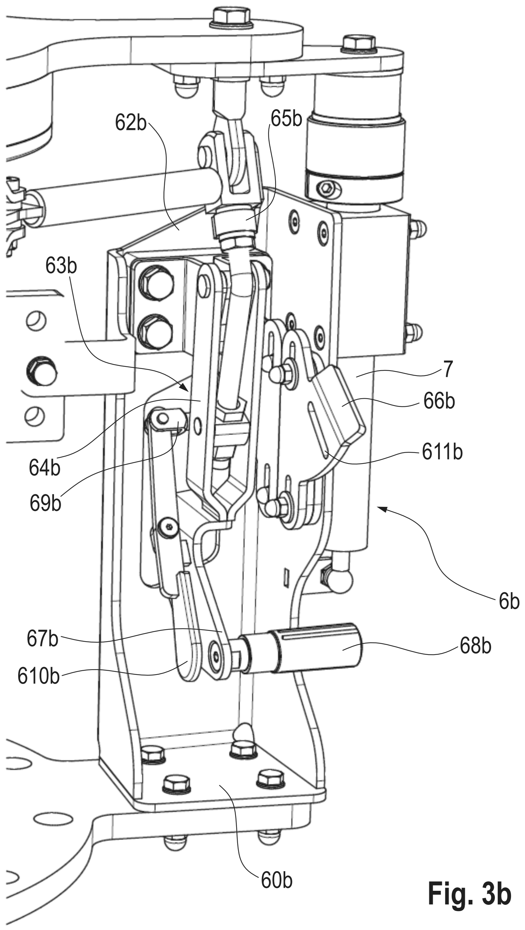

Figur 3a und 3b zeigen die aufgebaute Anschlussvorrichtung 1, wobei die in den vorstehenden Figuren eingesetzten pneumatischen Führungseinrichtungen 6a durch die modular austauschbaren mechanischen Führungseinrichtungen 6b ausgetauscht sind bzw. die Anschlussvorrichtung 1 unter Einsatz der mechanischen Führungseinrichtungen 6b aufgebaut ist.

Figur 3b zeigt eine der mechanischen Führungseinrichtungen 6b in einer vergrößerten Darstellung.

Aus Figuren 1 und 3a ist ersichtlich, dass die pneumatischen Führungseinrichtungen 6a und die mechanischen Führungseinrichtungen 6b so ausgeführt sind, dass sie gegeneinander ersetzbar sind, ohne dass die Führungsabschnitte 44 oder die Anbindungsabschnitte 24 geändert werden müssen.

Die pneumatische Führungseinrichtungen 6a besitzen jeweils ein Zylindergehäuse 62a, das an einem entsprechenden der Anbindungsabschnitte 24 befestigt ist. Die Befestigung bildet beispielsweise eine Schraubverbindung. Die Zylindergehäuse 62a haben im Bereich der Anbindungsabschnitte 24 jeweils bevorzugt eine Querschnittsfläche zwischen 8 cm x 8cm und 15 cm x 15 cm.

Die Zylindergehäuse 62a lagern jeweils einen Kolben 63a gleitend. Eine jeweilige Kolbenstange 64a greift einerseits an dem jeweiligen Kolben 63a an und ist andererseits in einem Gleitlager 65a gleitend gelagert. Außerhalb des Zylindergehäuses 62a ist die jeweilige Kolbenstange 62a an einem jeweiligen der Führungsabschnitte 44 der Dichteinrichtung 4 befestigt. Die Befestigung erfolgt bevorzugt durch eine Schraubverbindung.

Die Figuren 2a bis 2e zeigen das Innenleben der Zylindergehäuse 62a. Die Führungseinrichtungen 6a versetzten den jeweiligen Kolben 63a in dem jeweiligen Zylindergehäuse 62a, pneumatisch getrieben, gleitend, was dazu führt, dass die an die Dichteinrichtung 4 angebundenen Kolbenstangen die Dichteinrichtung 4 verstellen.

Eine nicht gezeigte Pneumatiksteuerung ist eingerichtet, die Führungseinrichtungen 6a so anzusteuern, dass die Dichteinrichtung 4 in die Anschlussstellung, die Zwischenstellung oder die Dichtstellung verstellt wird.

Die in den Figuren 3a und 3b gezeigten mechanischen Führungseinrichtungen 6b besitzen jeweils einen Gehäuserahmen 62b, der an einem entsprechenden der Anbindungsabschnitte 24 befestigt ist. Ein Befestigungsboden 60b des jeweiligen Gehäuserahmes hat eine ähnlich große Fläche wie die erläuterten Querschnittsflächen der Zylindergehäuse 62a und wird auf identische Art und Weise wie die Zylindergehäuse 62a an dem jeweiligen Anbindungsabschnitt 24 befestigt. Beispielsweise erfolgt das durch die bereits erwähnte Schraubverbindung, die bevorzugt, wie in Figuren 3a und 3b gezeigt, vier Schrauben beinhaltet.

Figur 3b zeigt die in Figur 3a gezeigte rechte Führungseinrichtung 6b in einer vergrößerten Darstellung. Die folgende Erläuterung erfolgt in Bezug auf diese mechanische Führungseinrichtung 6b. Die in Figur 3a gezeigte linke Führungseinrichtung 6b ist ledig spiegelbildlich aufgebaut, beinhaltet ansonsten die identischen Elemente, weshalb die Erläuterungen für beide Führungseinrichtungen 6b Geltung besitzen.

Der nach Aufbau der Anschlussvorrichtung 1 an dem Anbindungsabschnitt 24 befestigte Gehäuserahmen verläuft in Richtung der Kanalachse (A), insbesondere parallel hierzu.

Der Gehäuserahmen 62b haltert einen betätigbaren Spanner 63b, der sich bei Betätigung der mechanischen Führungseinrichtung 6b in Richtung der Kanalachse (A) relativ zu dem Gehäuserahmen 62b bewegt und die Dichteinrichtung 4 in die jeweiligen Stellungen verstellt.

Der Spanner 63b beinhaltet hierfür zwei Spannerarme 64b und 65b, wobei der eine Spannerarm 64b an dem Gehäuserahmen 62b drehbar befestigt ist. Der weitere Spannerarm 65b ist einerseits drehbar an dem einen Spannerarm 64b befestigt und andererseits an der Dichteinrichtung 4. Beide Spannerarme 64b, 65b haben eine Längserstreckung, die in der gezeigten Stellung in Richtung der Kanalachse A verläuft, wodurch der Spanner 63b kompakt in dem Gehäuserahmen 62b aufgenommen ist.

Verstellt ein Anwender den einen Spannerarm 64b durch eine Schwenkbewegung, bewegt das gleichzeitig den anderen Spannerarm 65b nach oben mit dem Effekt, dass die Dichteinrichtung 4 nach oben in die Zwischenstellung oder Anschlussstellung verstellt wird.

Bevorzugt beinhaltet die mechanische Führungseinrichtung 6b eine an dem Gehäuserahmen 62b befestigte Rastplatte 66b, die sich in Richtung der Kanalachse A parallel zu dem Spanner 63b erstreckt, und einen an dem einen Spannerarm 64b befestigten Schwenkhebel 67b.

Der Schwenkhebel 67b beinhaltet einen quer zur Kanalachse A verlaufenden Greifabschnitt 68b, der um seine Längsachse drehbar gelagert ist und an dem ein Anwander den Schwenkhebel 67b zur Verstellung der Dichteinrichtung 4 greifen kann. Der Greifabschnitt behält seine Orientierung quer zur Kanalachse während des gesamten Verstellens der Dichteinrichtung 4.

Ein Rastbolzen 69b des Schwenkhebels 67b dient zur Interaktion mit der genannten Rastplatte 66b. Der Rastbolzen 69b verläuft quer zur Kanalachse A und ist in Richtung der Rastplatte 66b vorgespannt. In der gezeigten Stellung ist der Rastbolzen 69b durch seine Vorspannung so weit in Richtung der Rastplatte 66b verschoben, dass der Schwenkhebel 67b blockiert ist und sich nicht bewegen lässt.

An dem Greifabschnitt 68b ist eine mit dem Rastbolzen 69b verbundene Rastbetätigung 610b ausgebildet, die der Anwender mit seinem Daumen betätigen kann, um den vorgespannten Rastbolzen 69b quer zur Kanalachse A in Richtung des Grundkörpers 2 zu versetzen. Die Rastbetätigung 610b ist ein vorgespannter Hebelmechanismus, der einerseits an dem Greifabschnitt 68b durch den Daumen betätigbar ist und anderseits den Rastbolzen 69b haltert und bei Betätigung zurückzieht.

Wenn der Anwender die Rastbetätigung 610b betätigt, wird der Rastbolzen 69b soweit zurückgezogen, dass der Schwenkhebel 67b frei ist und sich aus der gezeigten Stellung heraus bewegen lässt. Der Anwender kann nach geringfügiger Bewegung des Schwenkhebels 67b die Rastbetätigung 610b loslassen. Ein der Rastplatte 66b zugewandtes Ende des Rastbolzens 69b kommt hierdurch mit einer Oberfläche der Rastplatte 66b in Kontakt und kann hierauf gleiten bei weitergehender Bewegung.

Wenn die Dichteinrichtung 4 die Zwischenstellung erreicht, erfolgt ein Einrasten des Rastbolzens 69b. Die Rastplatte 66b besitzt hierfür einen Durchbruch 611b, der beispielsweise die Form eines Langloches hat. Das Einrasten des Rastbolzens 69b in den Durchbruch 611b sorgt für eine definierte Stellung. Der Anwender kann den eingerasteten Rastbolzen 69b wiederum durch die Rastbetätigung 610b lösen und durch weiteres Bewegen des Greifabschnittes 68b die Dichteinrichtung 4 in die Ausgangsstellung verstellen. Nach einer bestimmten Distanz gibt die Rastplatte 66b den Rastbolzen 69b in Gänze frei.

Eine Federeinrichtung 7, die beispielsweise eine Druckluftfeder oder Gasdruckfeder ist, entspannt sich linear bei Bewegung der Dichteinrichtung 4 von der Dichtstellung in die Ausgangsstellung und unterstützt damit die Bewegung des Greifabschnittes 68b bzw. des Spanners 63b durch den Anwender.

Die Federeinrichtung 7 ist an einer Außenseite des Gehäuserahmens 62b befestigt und wirkt über ein Verbindungsstück 70 zwischen dem anderen Spannerarm und dem entsprechenden Führungsabschnitt 44 der Dichteinrichtung 4. Eine Abänderung der Dichteinrichtung 4 ist bei Aufbau der Anschlussvorrichtung 1 nicht notwendig verglichen mit dem Aufbau auf Basis der pneumatischen Fördereinrichtung 6a.

Wenn der Anwender beabsichtigt, die Dichteinrichtung 4 von der Ausgangsstellung in die Zwischenstellung zu verstellen, nachdem er eine neue schlauchförmige Folie NF über den Grundkörper 2 gezogen hat, zieht er an dem Greifabschnitt 68b und bewegt den Spanner 63b nach unten. Hierbei komprimiert die Federeinrichtung 7.

Wenn der Greifabschnitt 68b und der Schwenkhebel 67b so weit nach unten bewegt sind, dass sich die Dichteinrichtung 4 in der Nähe der Zwischenstellung befindet, kommt der Rastbolzen 69b mit der Rastplatte 66b in Kontakt. Die Rastplatte 66b ist in den Kontaktbereich gebogen ausgebildet, sodass der Rastbolzen 69b allmählich vorgespannt wird, indem er in Richtung des Grundkörpers 2 bewegt wird.

Erreicht die Dichteinrichtung durch Bewegung des Greifabschnittes 68b bzw. des Schwenkhebels 67b die Zwischenstellung, erfolgt das bereits beschriebene Einrasten des Rastbolzens 69b.

Nachdem die in der Zwischenstellung erforderlichen Handgriffe durchgeführt wurden, löst der Anwender den eingerasteten Rastbolzen 69b, indem er die Rastbetätigung 610b betätigt und bewegt den Greifabschnitt 68b bzw. den Schwenkhebel 67b in die in Figuren 3a und 3b gezeigten Stellungen.

Aus dem erläuterten Aufbau der mechanischen Führungseinrichtung 6b wird verständlich, dass zwischen der mechanischen und pneumatischen Führungseinrichtung gewählt werden kann, ohne dass Anpassungen an den anderen Komponenten vorgenommen werden müssen.

Die Aufbaukomponenten wurden unter Bezug auf die Anschlussvorrichtung 1 erläutert, die insbesondere zum Entleeren eines Bigbags vorgesehen ist. Figuren 4a und 4b zeigen eine Anschlussvorrichtung 100 zum Befüllen eines Behälters wie ein BigBag. Im Wesentlichen unterscheidet sich diese Anschlussvorrichtung 100 von der Anschlussvorrichtung 1 lediglich dadurch, dass sie auf dem Kopf steht. Analoge Komponenten tragen deshalb identische Bezugszeichen, auch wenn sie konstruktiv leicht anders aufgebaut sind.

Ein Vergleich der Figuren 4a und 4b zeigt, dass auch bei dieser Variante zwischen der pneumatischen Führungseinrichtung 6a und der mechanischen Führungseinrichtung 6b ausgewählt werden kann, ohne das die entsprechende Dichteinrichtung 4 und der entsprechende Grundkörper 2 geändert/angepasst werden müssen.

Anders als in den Figuren 3a und 3b ist die Federeinrichtung 7 bevorzugt keine Gasdruckfeder, sondern eine Gaszugfeder.

Alle Ausführungen im Rahmen der Erläuterungen zu den Ausführungsformen gelten für den allgemeinen Teil vor der Figurenbeschreibung und vice versa.

## Patentansprüche

1. Aufbaukomponenten zum Aufbau einer Anschlussvorrichtung (1) zum Anschließen einer schlauchförmigen Folie an eine Einrichtung, um ein, insbesondere pulver-/granulatförmiges, Produkt durch die schlauchförmige Folie hindurch in und/oder aus der Einrichtung zu überführen, wobei die Aufbaukomponenten aufweisen:
einen Grundkörper (2), der einen Kanal (21) ausbildet, durch den, nach Aufbau der Anschlussvorrichtung (1), das Produkt bei dem Überführen bestimmungsgemäß strömt, wobei der Kanal (21) sich entlang einer Kanalachse (A) erstreckt und an einer Öffnung des Grundkörpers (20) endet und nach Außen mündet, wobei der Grundkörper (2) einen Anbindungsabschnitt (24) besitzt zur Anbindung einer eingesetzten Führungseinrichtung (6);
eine Dichteinrichtung (4), die einen Führungsabschnitt (44) aufweist, an dem die eingesetzte Führungseinrichtung (6) bei Aufbau der Anschlussvorrichtung (1) bestimmungsgemäß derart befestigt wird, dass sie die Dichteinrichtung (4) verstellen kann zwischen (i) einer Anschlussstellung, in der sie von dem Grundkörper (2) beabstandet ist und ein Überziehen der schlauchförmigen Folie über den Grundkörper (2) zulässt, und (ii) einer Dichtstellung, in der sie die über den Grundkörper (2) gezogene schlauchförmige Folie zur Überführung des Produktes gegenüber dem Grundkörper (2) abdichtet; und
mindestens eine pneumatische oder elektrische Führungseinrichtung (6a) und eine bevorzugt manuell betätigbare mechanische Führungseinrichtung (6b), aus denen bei Aufbau der Anschlussvorrichtung (1) die eingesetzte Führungseinrichtung wählbar ist; wobei
die bevorzugt manuell betätigbare mechanische Führungseinrichtung (6b) und die pneumatisch oder elektrisch betätigbare Führungseinrichtung (6a) derart dimensioniert und ausgestaltet sind, dass sie zueinander austauschbar sind, ohne dass der Anbindungsabschnitt (24) und der Führungsabschnitt (44) abgeändert werden müssen.

2. Aufbaukomponenten gemäß Anspruch 1, wobei
die bevorzugt manuell betätigbare mechanische Führungseinrichtung (6b) oder die pneumatisch oder elektrisch betätigbare Führungseinrichtung (6a) bei Aufbau der Anschlussvorrichtung (1) bestimmungsgemäß ausschließlich an dem Grundkörper (2) und der Dichteinrichtung (4) befestigt wird.

3. Aufbaukomponenten gemäß Anspruch 2, wobei
die bevorzugt manuell betätigbare mechanische Führungseinrichtung (6b) und die pneumatisch oder elektrisch betätigbare Führungseinrichtung (6a) derart ausgestaltet sind, dass sie nach dem wahlweisen Aufbau der Anschlussvorrichtung (1) parallel zu der Kanalachse (A) verlaufen.

4. Aufbaukomponenten nach einem der Ansprüche 1 bis 3, weiterhin aufweisend:
eine Klemmeinrichtung (3), die nach Aufbau der Anschlussvorrichtung (1) bestimmungsgemäß den Grundkörper (2) umläuft und eingerichtet ist, die über den Grundkörper (2) gezogene schlauchförmige Folie in einem Klemmbereich abgedichtet festzuklemmen; wobei
die verstellbare Dichteinrichtung (4) in eine sich zwischen der Anschlussstellung und der Dichtstellung befindende Zwischenstellung verstellbar ist, in der sie die über den Grundkörper (2) gezogene schlauchförmige Folie derart auf einen in der Klemmeinrichtung (3) festgeklemmten Folienrest, der von einer vorangegangenen Überführung stammt, drückt, dass der Folienrest an dem Grundkörper anliegt und nach Lösen der Klemmeinrichtung (3) bevorzugt manuell in den Kanal (21) gezogen werden kann; und
die die manuell betätigbare mechanische Führungseinrichtung (6b) derart ausgestaltet ist, dass sie in der Zwischenstellung lösbar einrastet.

5. Aufbaukomponenten gemäß einem der vorangehenden Ansprüche, wobei
die Klemmeinrichtung ein Spannband oder eine Sackklemme ist, das/die nach Aufbau der Anschlussvorrichtung (1) die schlauchförmige Folie flach an den Grundkörper drückt.

6. Aufbaukomponenten gemäß einem der vorangehenden Ansprüche, wobei
die manuell betätigbare mechanische Führungseinrichtung (6b) einen an dem Anbindungsabschnitt (24) zu befestigenden Gehäuserahmen aufweist, der nach Aufbau der Anschlussvorrichtung (1) in Richtung der Kanalachse (A) verläuft und einen betätigbaren Spanner haltert, der sich bei Betätigung der mechanischen Führungseinrichtung in Richtung der Kanalachse (A) relativ zu dem Gehäuserahmen bewegt und die Dichteinrichtung (4) verstellt.

7. Anschlussvorrichtung (1) zum Anschließen einer schlauchförmigen Folie an eine Einrichtung, um ein, insbesondere pulver-/granulatförmiges, Produkt durch die schlauchförmige Folie hindurch in und/oder aus der Einrichtung zu überführen, wobei die Anschlussvorrichtung (1) aufweist:
einen Grundkörper (2), der einen Kanal (21) ausbildet, durch den das Produkt bei dem Überführen bestimmungsgemäß strömt, wobei der Kanal (21) sich entlang einer Kanalachse (A) erstreckt und an einer Öffnung des Grundkörpers (20) endet und nach Außen mündet, wobei der Grundkörper (2) einen Anbindungsabschnitt (24) besitzt, an dem eine manuell betätigbare mechanische Führungseinrichtung (6) angebunden ist;
eine Dichteinrichtung (4), die einen Führungsabschnitt (44) aufweist, an dem die manuell betätigbare mechanische Führungseinrichtung (6) derart befestigt ist, dass sie die Dichteinrichtung (4) verstellen kann zwischen (i) einer Anschlussstellung, in der sie von dem Grundkörper (2) beabstandet ist und ein Überziehen der schlauchförmigen Folie über den Grundkörper (2) zulässt, und (ii) einer Dichtstellung, in der sie die über den Grundkörper (2) gezogene schlauchförmige Folie zur Überführung des Produktes gegenüber dem Grundkörper (2) abdichtet; wobei
die manuell betätigbare mechanische Führungseinrichtung (6b) einen an dem Anbindungsabschnitt (24) befestigten Gehäuserahmen aufweist, der in Richtung der Kanalachse (A) verläuft und einen betätigbaren Spanner haltert, der sich bei Betätigung der mechanischen Führungseinrichtung in Richtung der Kanalachse (A) relativ zu dem Gehäuserahmen bewegt und die Dichteinrichtung verstellt.

8. Anschlussvorrichtung nach Anspruch 7 weiterhin aufweisend:
eine Klemmeinrichtung (3), die den Grundkörper (2) umläuft und eingerichtet ist, die über den Grundkörper (2) gezogene schlauchförmige Folie in einem Klemmbereich abgedichtet festzuklemmen; wobei
die verstellbare Dichteinrichtung (4) in eine sich zwischen der Anschlussstellung und der Dichtstellung befindende Zwischenstellung verstellbar ist, in der sie die über den Grundkörper (2) gezogene schlauchförmige Folie derart auf einen in der Klemmeinrichtung (3) festgeklemmten Folienrest, der von einer vorangegangenen Überführung stammt, drückt, dass der Folienrest an dem Grundkörper anliegt und nach Lösen der Klemmeinrichtung (3) bevorzugt manuell in den Kanal (21) gezogen werden kann; und
die die manuell betätigbare mechanische Führungseinrichtung (6b) derart ausgestaltet ist, dass sie in der Zwischenstellung lösbar einrastet.

9. Anschlussvorrichtung (1) gemäß Anspruch 8, wobei
die betätigbare mechanische Führungseinrichtung (6b) einen an dem Anbindungsabschnitt (24) befestigten Gehäuserahmen aufweist, der in Richtung der Kanalachse (A) verläuft und einen betätigbaren Spanner haltert, der sich bei Betätigung der mechanischen Führungseinrichtung in Richtung der Kanalachse (A) relativ zu dem Gehäuserahmen bewegt und die Dichteinrichtung verstellt.

10. Aufbaukomponenten nach Anspruch 6 oder Anschlussvorrichtung (1) gemäß Anspruch 9, wobei
die betätigbare mechanische Führungseinrichtung (6b) eine an dem Gehäuserahmen befestigte Rastplatte, die sich in Richtung der Kanalachse erstreckt, und einen an dem Spanner befestigten Schwenkhebel aufweist, der bei einem Schwenken den Spanner bewegt und mit einem quer zur Kanalachse (A) verlaufenden Rastbolzen in der Zwischenstellung in die Rastplatte lösbar einrastet.

11. Aufbaukomponenten nach Anspruch 10 oder Anschlussvorrichtung (1) gemäß Anspruch 10, wobei
der Schwenkhebel einen quer zur Kanalachse (A) verlaufenden Greifabschnitt aufweist, an dem ein Anwender den Schwenkhebel zur Verstellung der Dichteinrichtung greift und der während des gesamten Verstellens der Dichteinrichtung quer zur Kanalachse verläuft, wobei an dem Greifabschnitt eine Rastbetätigung ausgebildet ist, die ein Anwender in der Zwischenstellung zum Lösen des Rastbolzens betätigen kann.
